# EUROPÄISCHE PATENTSCHRIFT

(11) **EP 2 652 371 B1**
(45) Veröffentlichungstag und Bekanntmachung des Hinweises auf die Patenterteilung: **17.04.2019**
(21) Anmeldenummer: 12730980.5
(22) Anmeldetag: 02.07.2012
(51) Int. Cl.: F16K 7/12, F16K 27/02

(54) **MEMBRANVENTIL**
MEMBRANE VALVE
SOUPAPE À MEMBRANE

(30) Priorität: 29.07.2011 DE 102011080139; 06.10.2011 DE 102011084075
(43) Veröffentlichungstag der Anmeldung: 23.10.2013
(73) Patentinhaber: GEMÜ Gebr. Müller Apparatebau GmbH & Co. Kommanditgesellschaft, 74653 Ingelfingen (DE)
(72) Erfinder: MAYER, Jürgen, 74523 Schwäbisch Hall (DE); WOLPERT, Kai-Uwe, 74238 Krautheim (DE)
(74) Vertreter: DREISS Patentanwälte PartG mbB
(86) Internationale Anmeldenummer: PCT/EP2012/062844
(87) Internationale Veröffentlichungsnummer: WO 2013/017355

(56) Entgegenhaltungen:
- DE-A1- 3 813 925
- JP-A- 2005 163 877
- US-A- 6 116 281

## Beschreibung

Die Erfindung betrifft ein Membranventil, insbesondere für fluide Medien, mit einem Ventilkörper, einer Membran und einem durch einen Antrieb betätigbaren Verbindungsstück zur Beaufschlagung der Membran, wobei der Ventilkörper und die Membran aus Kunststoff bestehen.

Es sind Membranventile bekannt, die einen Ventilkörper mit einem Zufluss und einem Abfluss aufweisen (DE 20 2005 002 152 U1). Weiterhin weisen die Ventilkörper einen von einer Membran abdichtbaren Ventilsitz auf, wobei die Membran über ein Verbindungsstück mit einem Druckstück eines Antriebs in Verbindung steht.

Bei einem herkömmlichen Membranventil wird die Membrane bei der Montage zwischen dem Antrieb oder einem Zwischenstück auf der einen Seite und dem Ventilkörper auf der anderen Seite festgeklemmt. Dabei können sowohl der Antrieb oder das Zwischenstück als auch der Ventilkörper eine sogenannte QHD Dichtkontur aufweisen.

Aus der WO 2010/025 905 A1 ist eine einschichtige Membran bekannt, die auch einstückig mit dem Verbindungsstück ausgebildet oder an der das Verbindungsstück angeformt sein kann. Die Membran ist aus dem gleichen Kunststoff hergestellt, wie der Ventilkörper, z.B. aus Polyethylen (PE) oder aus Polyproylen (PP). Außerdem sind der Ventilkörper und die Membran durch Ultraschallschweißen fest miteinander zu einer fluiddichten und mit dem Antrieb koppelbaren Ventilkörpereinheit verbunden.

Durch die feste Verbindung von Ventilkörper und Membran zu einer abgedichteten Ventilkörpereinheit ist es möglich, die Ventilkörpereinheit als Einwegeinheit auszubilden und das Membranventil in ein Einwegschlauchsystem bzw. eine vorsterilisierbare pharmazeutische Anlage zu integrieren. Die Ventilkörpereinheit lässt sich somit kostengünstig als Wegwerf- bzw. Single-use-Ventilkörpereinheit ausbilden und an einen wieder verwendbaren Antrieb ankoppeln bzw. mit diesem verbinden. Durch die feste Verbindung von Membran und Ventilkörper wird die Ventilkörpereinheit während der Transportphase abgedichtet. Damit wird eine Kontamination des Ventilraumes bzw. der Umwelt vermieden. Es hat sich jedoch gezeigt, dass die Verschweißung von Membran und Ventilkörper, insbesondere mittels Ultraschall, prozessimmanent einen gewissen Partikelabtrieb erzeugt. Dieser Partikelabtrieb kann nach erfolgter Verschweißung nicht mehr aus dem Ventil herausgespült werden. Er könnte aber bei der bestimmungsgemäßen Verwendung des Ventils als Rückstand in dem das Ventil durchfließenden Flüssigkeits- und/oder Gasstrom nachgewiesen werden.

DE 38 13 925 A1 beschreibt ein Ventil zur Sperrung eines Probenkanals. Eine Membran des Ventils ist mit einem Membranhalter verklebt oder verschweißt.

JP 2005 163877 beschreibt ein Ventil wobei der Ventilkörper und die Membran miteinander verschweißt sind.

Der Erfindung liegt daher die Aufgabe zugrunde, ein Membranventil bereit zu stellen, bei welchem höchste Ansprüche an die Abdichtung aber auch an die sterile Behandlung der zu führenden Medien gestellt werden.

Diese Aufgabe wird erfindungsgemäß dadurch gelöst, dass zwei voneinander unabhängige Abdichtungen für das fluide Medium nach außen hin vorgesehen sind, indem der Ventilkörper und die Membran sowohl miteinander verschweißt sind als auch die Membran zwischen dem der Antrieb oder einem Zwischenstück einerseits und dem Ventilkörper andererseits mechanisch abgedichtet ist.

Die erfindungsgemäße Verbindung besitzt also zwei Abdichtungen, die voneinander unabhängig sind. Die erste, mechanische Abdichtung ermöglicht letztlich über den durch die beiden mit dieser Kontur ausgestatteten Bauteile (Ventilkörper und Antrieb oder Zwischenstück) auf die Membran ausgeübten Druck die Dichtigkeit des Ventils gegen außen hin.

Die zweite Abdichtung wird mit einer Verschweißung von Membran und Ventilkörper erzielt. Somit weist das erfindungsgemäße Membranventil zwei voneinander unabhängige Abdichtungen gegen außen hin auf und ist bestens geeignet als Single-Use-Ventil verwendet zu werden.

Die Schweißdichtung stellt während des Transports die Dichtigkeit der Ventilkörpereinheit nach außen hin sicher. Sobald aber die Ventilkörpereinheit an das am Antrieb befindliche Zwischenstück angekoppelt wird, tritt zusätzlich die andere Abdichtung in Aktion.

Eine einfache Herstellung und optimale Abdichtung wird dadurch, erreicht, dass erfindungsgemäß die mechanische Abdichtung in Form von Vorsprüngen einerseits am Ventilkörper und/oder andererseits am Antrieb oder am Zwischenstück ausgebildet ist. Zwischen derartigen Vorsprüngen, die ringförmig und umlaufend sind, kann die Membran optimal geklemmt werden. Vorteilhaft liegen dabei die Vorsprünge einander gegenüber und nehmen die Membran zwischen sich auf.

Bei einer bevorzugten Ausführungsform der Erfindung ist die mechanische Abdichtung als eine Klemmung oder Quetschung ausgebildet. Derartige Abdichtungen sind an sich bekannt und haben sich seit Jahrzehnten bewährt. Sie sind einfach herzustellen und zuverlässig.

Bei einer vorteilhaften Ausführungsform des erfindungsgemäßen Membranventils sind die beiden Abdichtungen kreisförmig angeordnet. Nuten und/oder Vorsprünge können relativ einfach als Kreisbogen hergestellt werden. Außerdem erlaubt die Kreisbogenform eine wesentlich bessere Abdichtungen als andere Formen.

Mit Vorzug sind die beiden Abdichtungen in Form von konzentrischen Kreisen ausgebildet. Die Symmetrie erlaubt ebenfalls eine verbesserte Abdichtung als andere Dichtungsanordnungen.

Gemäß der Erfindung ist die mechanische Abdichtung radial innen und die geschweißte Abdichtung radial außen angeordnet. Wird nun das Membranventil vor seiner Beaufschlagung mit Prozessflüssigkeit und/oder Gas auf das Zwischenstück montiert, dann dichtet die innen liegende mechanische Abdichtung den überströmten Dichtsitz gegen die weiter außen liegende Schweißabdichtung bzw. gegen die bei der Schweißung erzeugten Partikeln ab. Durch diese doppelte Abdichtung kann eine Partikelfreiheit für die Ventilkörpereinheit garantiert werden. Zwischen der Schweißdichtkante und dem eigentlichen, von der Flüssigkeit überströmten Ventildichtsitz ist nun die zusätzliche mechanische Abdichtung angeordnet. Durch diese Abdichtung bleiben sämtliche, während der Ultraschallschweißung allfallenden Partikel zwischen der mechanischen und der geschweißten Abdichtung gefangen.

Bei einem bevorzugten Ausführungsbeispiel der Erfindung, ist die mechanische Abdichtung eine (Qualified Hygienic Design) QHD Dichtung. Diese Abdichtung gewährleistet, dass das erfindungsgemäße Membranventil auch in Reinsträumen, z.B. bei der Chipherstellung, im Lebensmittel- und Pharmabereich eingesetzt werden kann.

Produzenten von Lebensmitteln und Pharmazeutika verlangen, dass Hersteller von Anlagen und Komponenten für keimarme oder sterile Anwendungen nachweisen, dass die Grundregeln einer hygienegerechten Konstruktion beachtet worden sind und eine leichte Reinigbarkeit gewährleistet ist. Die bisher angewandten Methoden zur Überprüfung der Reinigbarkeit sind sehr aufwendig, kostenintensiv und kompliziert in der Interpretation der Ergebnisse. Eine Alternative ist das Prüfsystem Qualified Hygienc Design (QHD) vom VDMA.

QHD steht für ein Prüfsystem für die Reinigbarkeit von Komponenten. Die erste Stufe beinhaltet den theoretischen Nachweis der hygienegerechten Konstruktion. Die Einhaltung dieser für das jeweilige Bauteil relevanten Normen kann mit einer Eigenbescheinigung und mit dem auf das Bauteil aufgeklebten QHD-Zeichen dokumentiert werden. Damit erklärt der Hersteller, dass er sich an die in den Regelwerken festgeschriebenen üblichen Anforderungen an eine hygienegerechte Konstruktion gehalten hat. Die zweite Stufe beschäftigt sich mit dem praktischen Nachweis der Reinigbarkeit. Die Überprüfung der Reinigbarkeit erfolgt mit Hilfe eines Standardtests, der vom Lehrstuhl für Maschinen- und Apparatekunde der Technischen Universität München/Weihenstephan entwickelt wurde. Als Standardtest kommt zur Zeit die ATP-Methode zur Anwendung. Sie hat sich in verschiedenen Bereichen der Lebensmittelherstellung und bei Hygienefragen bewährt. ATP ist eine energiespeichernde Substanz, die in Keimen, tierischen und pflanzlichen Zellen vorkommt. Der Nachweis erfolgt über eine biochemische Reaktion des Luziferin-Luziferase-Systems. Das dabei aufgrund der Biolumineszenz ausgesendete Licht wird gemessen und seine Intensität zur Auswertung herangezogen. Maßeinheit für die Lichtmenge sind Relative Light Units (RLUs).

Bei einem bevorzugten Ausführungsbeispiel der Erfindung, wird die geschweißte Abdichtung in einer Nut-Feder-Abdichtung gebildet. Dabei ist der Ventilkörper mit einer Nut versehen, in welche eine an der Membran vorgesehene Feder eingreift. Bevorzugte Ausführungsformen sehen vor, dass die Nut und/oder die Feder einen rechteckförmigen oder kegelstumpfförmigen Querschnitt aufweisen.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und/oder in den Ansprüchen erwähnten Merkmale jeweils einzeln für sich oder in beliebiger Kombination erfindungswesentlich sein.

In der Zeichnung zeigen:
Figur 1 einen Längsschnitt durch ein Membranventil mit Antrieb; und
Figur 2 eine vergrößerte Wiedergabe der Ausschnitts II gemäß Figur 1.

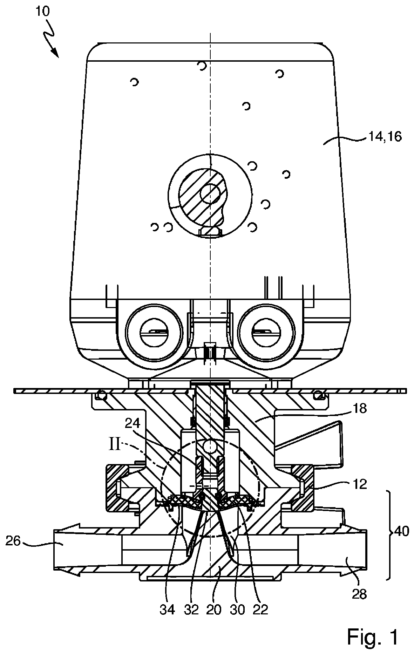

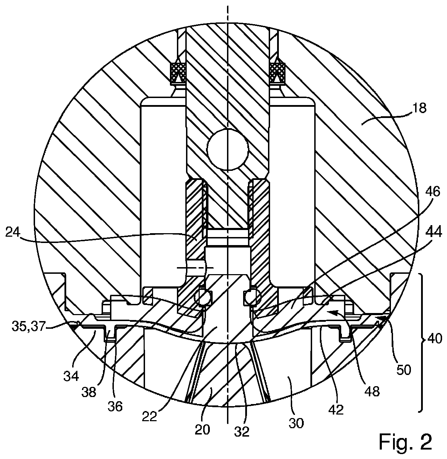

Die Figur 1 zeigt ein insgesamt mit 10 bezeichnetes Membranventil, bei welchem mittels einer Klemmschelle 12 ein Ventilkörper 20 an einem Antrieb 14 befestigt ist, der ein elektrisch, hydraulisch oder pneumatisch betriebenes Antriebsaggregat 16 und ein Zwischenstück 18 aufweist. Der Ventilkörper 20 ist mit einer Membran 22 mit einem Verbindungsstück 24 bestückt, welche in der Figur 2 im Detail wiedergegeben ist. Der Ventilkörper 20 weist einen Zufluss 26 und einen Abfluss 28 auf, die in einen zwischen dem Ventilkörper 20 und der Membran 22 begrenzten Ventilraum 30 münden, wobei die Verbindung zwischen Zufluss 26 und Abfluss 28 durch Anpressen der Membran 22 gegen einen Ventilsitz 32 unterbrochen wird.

Die Membran 22 ist an einem den Ventilsitz 32 überragenden Absatz 34 des Ventilkörpers 20 gelagert und dichtet den Ventilkörper 20 gegenüber dem Antrieb 14 und der Umgebung ab. Der Ventilkörper 20 und die Membran 22 sind im Ausführungsbeispiel aus Kunststoff, insbesondere aus Polyethylen (PE) oder aus Polyproylen (PP) oder einem thermoplastischen Elastomer (TPE) ausgebildet.

Wie aus Figur 2 erkennbar, sind die Membran 22 und der Ventilkörper 20 flüssigkeits- und gasdicht im Bereich des Absatzes 34, insbesondere durch Ultraschallschweißung miteinander verbunden. Hierfür weist der Ventilkörper 20 im Bereich seines Absatzes 34 einen ringförmig um den Ventilraum 30 umlaufenden Energierichtungsträger 35 in Form einer Kreisringschneide 37 auf. Radial innenliegend ist die Membran 22 mit einer ringförmig umlaufenden Feder 38 versehen, welche in eine im Ansatz vorgesehene Nut 36 eingreift. Dabei weist die Nut 36 einen rechteckförmigen und die Feder 38 einen kegelstumpfförmigen Querschnitt auf, wodurch das Einführen der Feder 38 in die Nut 36 erleichtert wird. Die Feder 38 und die Nut 36 verhindern ein Eindringen des Schweißaustriebes in den Ventilraum 30. Durch die Verschweißung entsteht eine selbständig handhabbare Ventilkörpereinheit 40, deren Ventilraum 30 von der Membran 22 nach außen dicht verschlossen ist.

Wird die Ventilkörpereinheit 40 an das Zwischenstück 18 angesetzt, dann wird die Membran 22 zusätzlich geklemmt. Hierfür weist der Ventilkörper 20 an seinem Absatz 34 einen ringförmig umlaufenden Vorsprung 42 auf, der radial innerhalb der Nut 36 liegt. Gegenüber dem Vorsprung 42 befindet sich am Zwischenstück 18 ebenfalls ein Vorsprung 44, so dass die Membran 22 beim Fügen von Ventilkörper 20 und Zwischenstück 18 gequetscht wird. Beim Ausführungsbeispiel der Figur 2 wird die Rückseite der Membran 22 von einer Dämpfungsscheibe 46 übergriffen, die ein Flattern der Membran 22 verhindert. Bei diesem Ausführungsbeispiel sind die Vorsprünge 42 und 44 derart bemessen, dass nicht nur die Membran 22 sondern zusätzlich auch die Dämpfungsscheibe 46 geklemmt wird.

Die Klemmung stellt eine mechanische Abdichtung 48 im Gegensatz zur Verschweißung 50 dar. Außerdem ist die Klemmung eine QHD Dichtung. Wie bereits erwähnt verhindern die Nut 36 und die Feder 38, dass der bei der Verschweißung 50 von Membran 22 und Ventilkörper 20 prozessimmanent erzeugte Partikelabtrieb, der nach erfolgter Verschweißung 50 nicht mehr aus der Ventilkörpereinheit 40 herausgespült werden kann, nicht in den das Membranventil 10 durchströmenden Flüssigkeits- und/oder Gasstrom gelangt. Der Partikelabrieb bleibt zwischen der Verschweißung 50 und der mechanische Abdichtung 48 gefangen.

## Patentansprüche

1. Membranventil (10), insbesondere für fluide Medien, mit einem Ventilkörper (20), einer Membran (22) und einem durch einen Antrieb (14) betätigbaren Verbindungsstück (24) zur Beaufschlagung der Membran (22), wobei der Ventilkörper (20) und die Membran (22) aus Kunststoff bestehen, **dadurch gekennzeichnet,**
**dass** zwei voneinander unabhängige Abdichtungen (48, 50) für das fluide Medium nach außen hin vorgesehen sind, indem der Ventilkörper (20) und die Membran (22) sowohl miteinander verschweißt sind als auch die Membran (22) zwischen dem Antrieb (14) oder einem Zwischenstück (18) einerseits und dem Ventilkörper (20.) andererseits mechanisch abgedichtet ist, wobei die mechanische Abdichtung (48) in Form eines ringförmigen umlaufenden Vorsprungs (42) am Ventilkörper (20) einerseits und/oder eines ringförmigen umlaufenden Vorsprungs (44) am Antrieb (14) oder am Zwischenstück (18) andererseits ausgebildet ist.

2. Membranventil nach Anspruch 1, **dadurch gekennzeichnet, dass** die mechanische Abdichtung (48) eine Klemmung oder Quetschung ist.

3. Membranventil nach einem der vorhergehenden Ansprüche, **dadurch gekennzeichnet, dass** die beiden Abdichtungen (48, 50) kreisförmig angeordnet sind.

4. Membranventil nach einem der vorhergehenden Ansprüche, **dadurch gekennzeichnet, dass** die beiden Abdichtungen (48, 50) in Form von konzentrischen Kreisen ausgebildet sind.

5. Membranventil nach einem der vorhergehenden Ansprüche, **dadurch gekennzeichnet, dass** die mechanische Abdichtung (48) radial innen und die geschweißte Abdichtung (50) radial außen angeordnet ist.

6. Membranventil nach einem der vorhergehenden Ansprüche, **dadurch gekennzeichnet, dass** die mechanische Abdichtung (48) eine (Qualified Hygienic Design) QHD Dichtung ist.

7. Membranventil nach einem der vorhergehenden Ansprüche, **dadurch gekennzeichnet, dass** radial innerhalb der geschweißten Abdichtung (50) eine Nut (36) und Feder (38) Dichtung vorgesehen ist.

8. Membranventil nach Anspruch 7, **dadurch gekennzeichnet, dass** der Ventilkörper (20) mit der Nut (36) versehen ist, in welche die an der Membran (22) vorgesehene Feder (38) eingreift.

9. Membranventil nach Anspruch 7 oder 8, **dadurch gekennzeichnet, dass** die Nut (36) und/oder die Feder (38) einen rechteckförmigen oder kegelstumpfförmigen Querschnitt aufweisen.

## Claims

1. A diaphragm valve (10), in particular for fluid media, comprising a valve body (20), a diaphragm (22) and a connecting piece (24) operable by a drive (14) for acting on said diaphragm (22), wherein said valve body (20) and said diaphragm (22) are made of plastic, **characterized in that** two mutually independent sealings (48, 50) are provided for the fluid medium toward the outside by welding together said valve body (20) and said diaphragm (22) as well as by mechanically sealing said diaphragm (22) between said drive (14) or an intermediate piece (18) on the one hand and said valve body (20) on the other hand, wherein the mechanical sealing (48) is formed in the shape of an annular circumferential protrusion (42) on said valve body (20) on the one hand and/or in the shape of an annular circumferential protrusion (44) on said drive (14) or on said intermediate piece (18) on the other hand.

2. The diaphragm valve according to claim 1, **characterized in that** the mechanical sealing (48) is a clamping or pinching.

3. The diaphragm valve according to one of the preceding claims, **characterized in that** both sealings (48, 50) are arranged circularly.

4. The diaphragm valve according to one of the preceding claims, **characterized in that** both sealings (48, 50) are formed in the shape of concentric circles.

5. The diaphragm valve according to one of the preceding claims, **characterized in that** said mechanical sealing (48) is arranged radially inside and said welded sealing (50) is arranged radially outside.

6. The diaphragm valve according to one of the preceding claims, **characterized in that** said mechanical sealing (48) is a Qualified Hygienic Design (QHD) sealing.

7. The diaphragm valve according to one of the preceding claims, **characterized in that** a groove (36) and tongue (38) sealing is provided radially inside said welded sealing (50).

8. The diaphragm valve according to claim 7 **characterized in that** said valve body (20) is provided with said groove (36), in which said tongue (38) provided on said diaphragm (22) engages.

9. The diaphragm valve according to claims 7 or 8 **characterized in that** said groove (36) and/or said tongue (38) have a rectangular or frustoconical cross section.

## Revendications

1. Soupape à membrane (10), en particulier pour des milieux fluides, ayant un corps de soupape (20), une membrane (22) et un connecteur (24) pouvant être actionné par un entraînement (14) pour agir sur la membrane (22), dans laquelle le corps de soupape (20) et la membrane (22) sont en matière plastique, **caractérisée en ce que** deux joints d'étanchéité (48, 50) pour le milieu fluide indépendants l'un de l'autre sont prévus vers l'extérieur, le corps de soupape (20) et la membrane (22) sont soudés l'un à l'autre, de même que la membrane (22) est rendue étanche mécaniquement entre l'entraînement (14) ou une pièce intermédiaire (18), d'une part, et le corps de soupape (20), d'autre part, dans lequel le joint d'étanchéité mécanique (48) est réalisé sous la forme d'une saillie circonférentielle annulaire (42) sur le corps de soupape (20), d'une part, et/ou d'une saillie circonférentielle annulaire (44) sur l'entraînement (14) ou sur la pièce intermédiaire (18), d'autre part.

2. Soupape à membrane selon la revendication 1, **caractérisée en ce que** le joint d'étanchéité mécanique (48) est à serrage ou pincement.

3. Soupape à membrane selon l'une quelconque des revendications précédentes, **caractérisée en ce que** les deux joints d'étanchéité (48, 50) sont disposés de manière circulaire.

4. Soupape à membrane selon l'une quelconque des revendications précédentes, **caractérisée en ce que** les deux joints d'étanchéité (48, 50) sont réalisés la forme de cercles concentriques.

5. Soupape à membrane selon l'une quelconque des revendications précédentes, **caractérisée en ce que** le joint d'étanchéité mécanique (48) est agencé radialement vers l'intérieur et le joint d'étanchéité soudé (50) est agencé radialement vers l'extérieur.

6. Soupape à membrane selon l'une quelconque des revendications précédentes, **caractérisée en ce que** le joint d'étanchéité mécanique (48) est un joint d'étanchéité QHD (Qualified Hygienic Design).

7. Soupape à membrane selon l'une quelconque des revendications précédentes, **caractérisée en ce qu'**un joint constitué d'une rainure (36) et d'un ressort (38) est prévu radialement à l'intérieur du joint d'étanchéité soudé (50).

8. Soupape à membrane selon la revendication 7, **caractérisée en ce que** le corps de soupape (20) est prévu avec la rainure (36), dans laquelle le ressort (38) prévu au niveau de la membrane (22) vient en prise.

9. Soupape à membrane selon la revendication 7 ou 8, **caractérisée en ce que** la rainure (36) et/ou le ressort (38) ont une section transversale rectangulaire ou tronconique.
